# EUROPEAN PATENT APPLICATION

(11) **EP 3 272 824 A1**
(43) Date of publication of application: **24.01.2018**
(21) Application number: 16425071.4
(22) Date of filing: 20.07.2016
(51) Int. Cl.: C09J 7/02

(54) **CLEAR DOUBLE ADHESIVE LAYER MATERIAL AND ITS PRODUCTION PROCESS**

(71) Applicant: Nuceria Adesivi s.r.l., 84015 Nocera Superiore (SA) (IT)
(72) Inventor: Stanzione, Arturo, 84014 Nocera Inferiore (SA) (IT)

(57) **Abstract**

Clear double adhesive layer material and production process.

This invention makes reference to a product or a multilayer transparent material, in particular a transparent laminar plastic material having both surfaces, front and rear, provided with adhesive, each covered by at least a plastic laminar sheet, transparent and removable and to its process of realization.

The new self-adhesive plastic material stands out by the fact to be completely transparent, so it has the property of not hide any information printed on the product surface where the double-sided adhesive transparent plastic material is applied.

It is made of (1) a transparent plastic film of polypropylene (1) with a thickness from 12 microns to 60 microns, of a permanent transparent adhesive layer (2, 2 ') that coat both faces, upper and lower, of the plastic film (1), and of the two supports of siliconized PET release liner (3, 3 ') with variable thickness of 23 to 30 microns, which cover the two adhesive layers (2, 2').

## Description

Clear double adhesive layer material and its production process.

This invention makes reference to a product or a multilayer transparent material, in particular a transparent laminar plastic material having both surfaces, front and rear, provided with adhesive, each covered by at least a plastic laminar sheet, transparent and removable and to its process of realization.

At least the upper plastic laminar sheet needs to be clear.

On the market and know how there are laminar double-sided adhesive materials where each face provided with adhesive is covered with an opaque removable material.

In many contingencies and daily circumstances it is necessary that the packaging or the packaging already labeled product is secured in a given position. For example if you want to remove a particular product from its pack and you are not able to have both hands free to manipulate; or for commercial exposure requirements: a pack must be vertically held on a wall, or it must be kept in a vertical position and blocked on a floor, but the packaging does not have a perfectly flat bearing base. In addition there is the essential requirement that any messages or images that are printed on the packaging are not covered from this product. So the multilayer material must allow a perfect and continuous display of the information printed on the package.

Therefore the purpose of the present invention is to provide to the market a new self - adhesive transparent plastic material on the two surfaces (upper and lower) of the central substrate, that (if compared to available materials on the market) differs for the fact to be completely transparent, with the property to not hide any information printed on the product surface where the transparent plastic adhesive is applied.

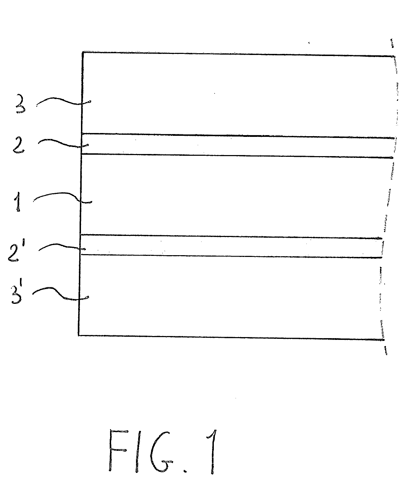

FIG. 1 shows, in a schematic sectional view, the various components of the multilayer material object of the present invention.

According to the attached drawing it is indicated with (1) a transparent plastic film of polypropylene with a thickness range from 12 microns to 60 microns, with (2, 2 ') the permanent transparent adhesive layer coated on the two faces, upper and lower, the plastic film (1), and with (3, 3 ') the two supports of siliconized PET release liner transparent with variable thickness of 23 to 30 microns, which cover the two adhesive layers (2).

The PET thickness from 30 microns is functional in order to be able to be easily repositioned on the product for multiple uses and applications.

As a variant of the same invention, one of the two supports of release liner, can be opaque, for example, glassine paper, in particular the one (3 ') which covers the adhesive layer intended to adhere on the surface of the product packaging (bottom layer, not the upper layer).

The product is made with a rotary technology through a coater line ETI CONVERTING COHESIO, with the following steps:

The lower surface of the transparent plastic film of polypropylene (1) is coated with a permanent transparent adhesive (2), then this adhesive (2) is laminated with a liner siliconized PET transparent support (3).

Then this self adhesive monolayer and clear film is coated on the top layer of polypropylene (1) with a permanent transparent adhesive layer (2 ') and this adhesive (2 ') is laminated with a liner siliconized PET transparent support (3').

To give to the material, object of the present invention, functional and technical properties and economic goals, it has been realized choosing all materials and adhesives that are available on the market and different attempts and then test on layout / modified prototypes have been done.

Different compositions of material substrates of the central and peripheral device and the type of adhesive have been used. Different tests have been done with permanent adhesives, acrylic-based or rubber-based, or with a basis of elastomeric solvent, which exhibited good initial tack and adhesion to a wide variety of substrates and that have provided functionally equivalent results.

In conclusion the result was a transparent adhesive film with a high internal resistance, strength and tear resistance that can be applied on any surface. Also it has got a solution " sustainable " because it is made of recyclable transparent plastic film layers.

This result is innovative because this type of material is not present on the market; It ensures that the benefits of using a double-sided adhesive film with the characteristic of being completely transparent , therefore, this product does not lost any information printed on the underlying surface of the package and for that reason any technical / graphics change to the application surface is required.

## Claims

1. Multilayer transparent adhesive material, that it is made of a transparent plastic film of polypropylene (1) with a variable thickness from 12 microns to 60 microns; a permanent transparent adhesive layer (2, 2 ') coated on each of its two faces, upper and lower, of the plastic film (1); and two supports of release liner (3, 3 '), with variable thickness of 23 to 30 microns, which cover the two transparent adhesive layer (2, 2 ').

2. adhesive transparent multilayer as in claim 1) with the property that the release liner supports (3,3') are in transparent PET.

3. adhesive transparent multilayer as in claim 1) with the property that the siliconized liner support (3) is transparent PET, while the siliconized liner support (3 ')can be also opaque, and can be plastic or glassine.

4. Multilayer transparent adhesive as in claim 1) **characterized in that** it is realized through a rotary technology by means of a line coater with the following steps:
a) The lower surface of the transparent plastic film of polypropylene (1) is coated with a permanent transparent adhesive (2), then this adhesive (2) is laminated with a PET liner siliconized transparent support (3).
b) making the coating of the free upper layer of the transparent plastic film of polypropylene (1) with a permanent transparent adhesive layer (2 ') and then this adhesive (2 ') is laminated with a PET liner siliconized transparent support (3').

5. Multilayer transparent adhesive as in claim 1) and 4) characterized from the fact that the lamination with the lower layer free of the transparent plastic film of polypropylene (1) provided with a permanent transparent adhesive layer (2 ') is carried out with an opaque release liner support, in plastic material or glassine paper.
